# EUROPÄISCHE PATENTSCHRIFT

(11) **EP 2 698 560 B1**
(45) Veröffentlichungstag und Bekanntmachung des Hinweises auf die Patenterteilung: **14.10.2015**
(21) Anmeldenummer: 12005879.7
(22) Anmeldetag: 14.08.2012
(51) Int. Cl.: F16F 13/26

(54) **Hydrolager**
Hydraulic support
Couche hydraulique

(43) Veröffentlichungstag der Anmeldung: 19.02.2014
(73) Patentinhaber: TrelleborgVibracoustic GmbH, 64293 Darmstadt (DE)
(72) Erfinder: Eckel, Hans-Gerd, 69514 Laudenbach (DE)
(74) Vertreter: Flügel Preissner Kastel Schober

(56) Entgegenhaltungen:
- EP-A1- 1 526 303
- DE-A1-102009 044 773
- DE-C1- 4 330 560
- US-A1- 2001 032 919
- US-A1- 2005 218 734

## Beschreibung

### Technisches Gebiet

Die Erfindung betrifft ein Hydrolager, umfassend ein Traglager und ein Auflager, die durch einen im Wesentlichen hohlkegelförmig ausgebildeten Federkörper aus gummielastischem Werkstoff elastisch nachgiebig aufeinander abgestützt sind und einen Arbeitsraum und einen Ausgleichsraum, die axial in Richtung der betriebsbedingt eingeleiteten Schwingungen benachbart zueinander angeordnet und jeweils mit Dämpfungsflüssigkeit gefüllt sind und auf ihren axial einander zugewandten Seiten durch eine gemeinsame Trennwand räumlich voneinander getrennt und durch einen in der Trennwand angeordneten Dämpfungskanal flüssigkeitsleitend miteinander verbunden sind und wobei die Trennwand eine Durchtrittsöffnung aufweist, die einen Bestandteil eines durch eine Stelleinrichtung schaltbaren Tilgerkanals bildet.

### Stand der Technik

Ein solches Hydrolager ist aus der US 2005/0218734 A1 bekannt. Bei dem vorbekannten Hydrolager ist am Auflager, auf der dem Traglager axial abgewandten Seite, die Stelleinrichtung relativ ortsfest angeflanscht, wobei die Stelleinrichtung einen elektrisch ansteuerbaren Elektromagnet mit einer Spule umfasst. Die Spule ist relativ ortsfest in der Stelleinrichtung angeordnet, wobei die Stelleinrichtung ein Stellglied umfasst, das durch die Spule antreibbar und in axialer Richtung hin- und herbeweglich ist.

Das vorbekannte Hydrolager ist insgesamt konstruktiv aufwendig und schwer, weil es modular derart aufgebaut ist, dass im Prinzip aus einem nicht-schaltbaren Hydrolager durch das starre Anflanschen der Stelleinrichtung an das Auflager ein schaltbares Hydrolager entsteht.

Aus der US 2001/0032919 A1 ist ein Hydrolager bekannt, das ähnlich wie das zuvor beschriebene Hydrolager aus der US 2005/0218734 A1 aufgebaut ist. Auch dieses Hydrolager umfasst ein nicht-schaltbares Hydrolager und eine Stelleinrichtung, die axial auf der dem Traglager abgewandten Seite des Hydrolagers starr angeflanscht ist. Die Stelleinrichtung umfasst einen elektrisch ansteuerbaren Elektromagnet mit Spulen, wobei die Spulen relativ ortsfest in der Stelleinrichtung angeordnet sind.

Ein weiteres Hydrolager ist aus der DE 43 30 560 C1 bekannt. Die Stelleinrichtung ist durch ein Druckmittel beaufschlagbares Stellglied gebildet, und die Durchtrittsöffnung hat einen sich in radialer Richtung erstreckenden, mäanderförmigen Querschnitt. Durch das vorbekannte Hydrolager stellt sich insbesondere im Leerlauf einer mittels des Hydrolagers gelagerten Maschine eine deutlich abgesenkte wirksame Lagersteifigkeit ein. Durch die geringe Lagersteifigkeit werden störende Motorvibrationen im Leerlauf ausgezeichnet isoliert.

Das vorbekannte Hydrolager kann jedoch nur dann zur Anwendung gelangen, wenn ein ausreichend großer Differenzdruck zur Betätigung des Stellglieds der Stelleinrichtung vorhanden ist.

Aus der EP 1 526 303 A1 ist ein Hydrolager bekannt, mit einer zentral in der Trennwand angeordneten und als Tilgerkanal ausgebildeten Durchbrechung. Die Durchbrechung ist durch eine Stelleinrichtung, umfassend einen Antrieb und ein Stellelement, verschließbar. Das Stellelement ist kontinuierlich stufenlos verstellbar und weist eine Selbsthemmung auf. Zwischen dem Antrieb und dem Stellelement ist ein selbsthemmendes Getriebe angeordnet, wobei der Antrieb durch einen Elektromotor gebildet ist.

Aus der DE 10 2009 044 773 A1 ist ein Hydrolager mit variablem Bypass bekannt, mit einem verstellbaren Überströmkanal, der durch einen vorbestimmten Frequenzbereich möglichst kontinuierlich verstellbar ist. Das Verstellelement umfasst einen durch eine elektronische Schaltung steuerbaren Schrittmotor, wobei die rotatorische Bewegung des Schrittmotors in eine translatorische Bewegung umwandelbar und auf ein Stellglied übertragbar ist.

### Darstellung der Erfindung

Der Erfindung liegt die Aufgabe zugrunde, ein Lager der vorbekannten Art derart weiter zu entwickeln, dass es auch dann zur Anwendung gelangen kann, wenn Differenzdruck für die Betätigung der Stelleinrichtung nicht oder nicht in ausreichendem Maße zur Verfügung steht, das Hydrolager aber dennoch schaltbar sein und im Wesentlichen die gleichen vorteilhaften Gebrauchseigenschaften aufweisen soll.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass die Stelleinrichtung durch einen axial in Richtung der eingeleiteten Schwingungen schwingfähigen, elektrisch ansteuerbaren Elektromagnet gebildet ist, der als Anker ausgebildet ist, dass der Anker und die Trennwand durch ein rollbalgförmig ausgebildete und sich axial erstreckende erste Membran aus gummielastischem Werkstoff relativ schwingfähig miteinander verbunden sind, dass die erste Membran stirnseitig einerseits mit der Trennwand und stirnseitig andererseits mit dem Anker flüssigkeitsdicht verbunden ist.

In modernen Kraftfahrzeugen, insbesondere in Kraftfahrzeugen mit Hybrid- oder Elektroantrieben, ist häufig nicht ohne weiteres ein ausreichend großer Differenzdruck zur Betätigung pneumatischer Stelleinrichtungen verfügbar. Um die Stelleinrichtung von Hydrolagern trotzdem einfach und kostengünstig betätigen zu können, ist erfindungsgemäß der als Anker ausgebildete elektrisch ansteuerbare Elektromagnet vorgesehen.

Läuft die durch das Hydrolager gelagerte Maschine im Leerlauf, wird der Tilgereffekt dadurch erreicht, dass der Anker relativ schwingfähig innerhalb des Hydrolagers angeordnet ist. Der schwingfähige Anker führt bei Motorleerlauf zu einer deutlich kleineren wirksamen Lagersteifigkeit und damit zu einer verbesserten Isolation von störenden Motorvibrationen.

Wird der Motor demgegenüber oberhalb seiner Leerlaufdrehzahl betrieben, ist der Anker in seiner Position arretiert, das heißt, nicht mehr relativ schwingfähig innerhalb des Hydrolagers angeordnet.
In diesem Betriebszustand weist das Hydrolager Gebrauchseigenschaften auf, die im Wesentlichen den Gebrauchseigenschaften von nicht-schaltbaren Hydrolagem entsprechen.

Der Anker und die Trennwand sind durch eine rollbalgförmig ausgebildete und sich axial erstreckende erste Membran aus gummielastischem Werkstoff relativ schwingfähig miteinander verbunden, wobei die erste Membran stirnseitig einerseits mit der Trennwand und stirnseitig andererseits mit dem Anker flüssigkeitsdicht verbunden ist.

Die Tilgercharakteristik kann durch die elastische Nachgiebigkeit der ersten Membran eingestellt werden. Die Schwingfähigkeit des Ankers, relativ zur Trennwand, wird praktisch ausschließlich durch die Federeigenschaften der ersten Membran bestimmt. Die rollbalgförmige Ausbildung erlaubt Längenänderungen der ersten Membran in axialer Richtung.

Neben dem schwingfähigen System "Ankerrnasse und axiale Feder der ersten Membran" ist die Fluidsäule im Tilgerkanal auch gegen die Volumennachgiebigkeit des Federkörpers und die Volumennachgiebigkeit der ersten Membran (Btähfederraten) schwingfähig.

Die axiale' Federrate und die Blähfederrate der ersten Membran, die den schwingfähigen Anker innerhalb des Hydrolagers hält, sind mechanisch übersetzt. Die mechanische Übersetzung ergibt sich aus der Relation der hydraulischen Wirkflächen des hohlkegelförmig ausgebildeten Federkörpers und der ersten Membran.

Übersetzungen in gekoppelten mechanischen Systemen sind mit dem Quadrat des Übersetzungsverhältnisses wirksam.
Da das Übersetzungsverhältnis im vorliegenden Fall bei etwa 10 liegt, wird die Blähfederrate der ersten Membran auf den Federkörper bezogen 100-fach wirksam.

Dies ist der Grund, weshalb bei arretiertem Anker die wirksame Blähfederrate für die Stuckerbedämpfung nur unwesentlich kleiner ausfällt als die Blähfederrate des im Wesentlichen hohlkegelförmig ausgebildeten Federkörpers.

Ebenfalls zu erwähnen ist, dass für das schwingfähige System "Ankermasse und axiale Feder der ersten Membran" diese, auf den Federkörper bezogen, ebenfalls mit dem Quadrat der Übersetzung wirksam sind.

Die erste Membran hat also im Wesentlichen die Aufgabe, den Anker schwingfähig innerhalb des Hydrolagers zu halten.
Die flüssigkeitsdichte Festlegung der ersten Membran an der Trennwand und am Anker verhindert nachteilige Gebrauchseigenschaften des Hydrolagers.

Der Elektromagnet kann durch einen Gleichstrom ansteuerbar sein. Dadurch wird eine Schaltfunktion "ein / aus" ermöglicht.

Der Elektromagnet kann demgegenüber durch einen Wechselstrom ansteuerbar sein. Dadurch kann ein Schwinger aus einem ferromagnetischen Werkstoff angetrieben wird.

Der Gleichstrom kann von einem Wechselstrom überlagerbar sein. Der angetriebene Schwinger ist in einem solchen Fall als Permanentmagnet ausgebildet.

Der als Anker ausgebildete Elektromagnet kann kreisringförmig ausgebildet sein. Derart ausgebildete Elektromagneten sind für die vorgesehene Anwendung mit optimierter Abmessung kostengünstig herstellbar.

Der Elektromagnet kann einen Permanentmagnet außenumfangsseitig ortsfest umschließen und zusammen mit dem Permanentmagnet den Anker bilden. Der Elektomagnet besteht aus einem ferromagnetischen Gehäuse, einer Spule und einem Rückschlussteil. Bei einer solchen Ausgestaltung, bei der der Elektromagnet mit einem Permanentmagnet kombiniert ist, ist von Vorteil, dass das beanspruchte Hydrolager ein gutes Fail-Safe-Verhalten aufweist. Oberhalb der Leerlaufdrehzahl des gelagerten Motors ist der Elektromagnet nicht bestromt und deshalb nicht wirksam. Durch den Permanentmagnet wird der Anker des Hydrolagers arretiert.

Läuft der Motor demgegenüber mit Leerlaufdrehzahl oder in einem leerlaufnahen Drehzahlbereich, wird die Stelleinrichtung geschaltet; der Elektromagnet wird bestromt und das Magnetfeld des Elektromagnets wirkt der Kraft des Permanentmagneten entgegen. Zur Absenkung der dynamischen Federrate des Hydrolagers ist der Anker dann schwingfähig innerhalb des Hydrolagers angeordnet.

Generell besteht auch die Möglichkeit, dass die Schaltung der Stelleinrichtung derart erfolgt, dass der Anker bei Bestromung arretiert ist.
Soll sich der Anker zur Isolation von leerlaufbedingten Motorschwingungen schwingfähig innerhalb des Hydrolagers bewegen, um eine Absenkung der dynamischen Federrate des Hydrolagers zu bewirken, wird die Bestromung des Elektromagnets unterbrochen und der Permanentmagnet sorgt dafür, dass der Anker schwingfähig innerhalb des Hydrolagers angeordnet ist.
Eine derartige Schaltung ist jedoch im Hinblick auf ein gutes Fail-Safe-Verhalten nachteilig, weil bei unerwünscht unterbrochener Ansteuerung des Elektromagnets der Anker stets schwingfähig im Hydrolager angeordnet ist und diese Schwingfähigkeit des Ankers bei Drehzahlen oberhalb der Leerlaufdrehzahl zu nachteiligen Gebrauchseigenschaften, einer deutlich kleineren Stuckerbedämpfung des Hydrolagers führt.

Der Anker kann der Trennwand auf der dem Arbeitsraum axial abgewandten Seite axial mit Abstand benachbart zugeordnet sein. Dieser axiale Abstand muss derart bemessen sein, dass die Schwingfähigkeit des Ankers nicht beeinträchtigt ist.

Der Anker kann einen sich axial erstreckenden Führungsstift aufweisen, der sich axial bis in die Durchtrittsöffnung erstreckt und in der Durchtrittsöffnung von sich in radialer Richtung erstreckenden Führungsstegen aufgenommen ist. Der Führungsstift, der durch die Führungsstege geführt ist, bewirkt, dass der Anker innerhalb des Hydrolagers nur sehr kleine Taumelbewegungen ausführen kann und / oder ohne eine Verklemmung axial in Richtung der eingeleiteten Schwingungen hin und her beweglich ist.

Der Führungsstift kann von vorzugsweise drei gleichmäßig in Umfangsrichtung verteilt angeordneten Führungsstegen umschlossen sein. Diese geringe Anzahl von Führungsstegen ermöglicht einerseits, zusammen mit der ersten Membran, eine gute Führung des schwingenden Ankers und andererseits bleiben in Umfangsrichtung um den Führungsstift noch ausreichend viele Freiflächen, um einen Flüssigkeitsaustausch der Dämpfungsflüssigkeit zwischen dem Arbeitsraum und dem Tilgerkanal zu gewährleisten.

Die Trennwand kann als Düsenkäfig ausgebildet sein und zwei axial benachbart zueinander angeordnete Düsenscheiben umfassen, zwischen denen eine axial in Richtung der eingeleiteten Schwingungen schwingfähige zweite Membran angeordnet ist. Ein solcher Düsenkäfig zwischen Arbeitsraum und Ausgleichsraum gelangt zur Isolierung höherfrequenter, kleinamplitudiger Schwingungen zur Anwendung. Schwingungen, die zum Beispiel durch Motorvibrationen in das Hydrolager eingeleitet werden, werden dadurch isoliert, dass die innerhalb des Hydrolagers befindliche Dämpfungsflüssigkeit durch die Düsenscheiben hindurch auf die schwingfähige zweite Membran wirkt. Durch die Schwingungen der zweiten Membran werden die höherfrequenten, kleinamplitudigen Schwingungen isoliert.

Die Führungsstege und die zweite Membran können einstückig ineinander übergehend und materialeinheitlich ausgebildet sein und aus einem gummielastischen Werkstoff bestehen. Durch eine solche Ausgestaltung ist ein einfacher und teilearmer Aufbau des Hydrolagers gegeben. Die Montage des Hydrolagers wird dadurch vereinfacht und die Gefahr von Montagefehlem ist auf ein Minimum reduziert.

Der Anker, die erste Membran und die Durchtrittsöffnung bestimmen den Tilgerkanal. Das Volumen der Dämpfungsflüssigkeit, die sich im Tilgerkanal befindet und im leerlaufnahen Drehzahlbereich und bei Leerlaufdrehzahl zur Schwingungsisolation von leerlaufbedingten Motorvibrationen zwischen dem Tilgerkanal und dem Arbeitsraum hin und her schwingt und die Ankermasse, die hin und her schwingt, beeinflussen die Tilgerwirkung.

Im Gegensatz zu dem vorbekannten Hydrolager, das in der Beschreibungseinleitung gewürdigt ist, ist der Tilgerkanal in Richtung des Arbeitsraums stets offen. Der Strömungsquerschnitt vom Tilgerkanal in den Arbeitsraum wird ausschließlich durch die Führungsstege, jedoch nur in vernachlässigbarem geringem Maß, reduziert.

Der stets offene Strömungsquerschnitt zwischen dem Tilgerkanal und dem Arbeitsraum ist nicht von Nachteil, da die quadratisch wirksamen Übersetzungsverhältnisse auch bei arretiertem Anker die wirksame Blähfederrate für die Stuckerbedämpfung nur unwesentlich kleiner als die des Federkörpers allein ausfällen lässt.

Dem Anker kann auf der dem Tilgerkanal axial abgewandten Seite ein ferromagnetisches Rückschlussteil axial benachbart zugeordnet sein. Im nicht-bestromten Zustand des ansteuerbaren Elektromagnets wirkt durch den Permanentmagnet eine Magnetkraft, die für eine Festlegung des Ankers am Rückschlussteil sorgt. Das Betriebsverhalten des beanspruchten Hydrolagers unterscheidet sich dann praktisch nicht von dem Betriebsverhalten nichtschaltbarer Hydrolager. Die Magnetkraft des Permanentmagnets zwischen Anker und Rückschlussteil wird erst dann aufgehoben, wenn der Elektromagnet so bestromt wird, dass sich die Kraft des Elektromagnets und die Kraft des Permanentmagnets kompensieren. Die Kraft des Permanentmagnets wird dadurch aufgehoben und der Anker "schwebt" über dem Rückschlusstell.

Der angesteuerte Anker und das Rückschlussteil können einander mit axialem Abstand benachbart zugeordnet sein, wobei der axiale Abstand größer als die betriebsbedingte Amplitude des angesteuerten Ankers ist. Dadurch ist sichergestellt, dass der Anker im Motorleerlauf bei Schwingungsisolation der Motorvibration nicht unerwünscht am Rückschlussteil anschlägt.

Der nicht-angesteuerte Anker berührt das Rückschlussteil anliegend. Gehalten wird der Anker am Rückschlussteil durch die Kraft des Permanentmagneten.

Das Rückschlussteil kann relativ ortsfest an einem Gehäusedeckel festgelegt sein, der mit dem Auflager verbunden ist. Eine solche Festlegung ist konstruktiv einfach und kostengünstig herstellbar. Das Rückschlussteil ist dadurch ein Bestandteil des Gehäusedeckels.

Der Gehäusedeckel kann von einer elektrischen Leitung zur Ansteuerung des Elektromagnets durchdrungen sein. Die elektrische Leitung kann dabei einen Stecker aufweisen, der mit dem Gehäuse verbunden ist, so dass sich die elektrische Leitung von dem Stecker durch den Gehäusedeckel hindurch zum Elektromagnet erstreckt. Anstelle des Steckers kann eine Kupplung zur Anwendung gelangen. Der Stecker oder die Kupplung können gegenüber dem Gehäuse abgedichtet sein. Dadurch werden die elektrischen Verbindungen und auch das Innere des Hydrolagers vor Verunreinigungen geschützt.

Ein komplementärer Aufbau mit bewegtem, dem Tilgerkanal zugeordneten Rückschlussteil und einem am Gehäuse festgelegten Elektromagneten ist ebenfalls darstellbar.
In diesem Fall hat die elektrische Verbindung von Stecker oder Kupplung mit dem Elektromagneten keine Relativbewegung zu überbrücken.
Das Rückschlussteil ist hierbei aber mit der Masse des Elektromagneten auszuführen, so dass das gesamte Lager schwerer wird.
Die Variante mit ruhender Rückschlussplatte ist vorzuziehen.

Die erste Membran kann einstückig ineinander übergehend und materialeinheitlich mit einer im Wesentlichen rollbalgförmigen Abschlussmembran ausgebildet sein, die den Ausgleichsraum auf der der Trennwand axial abgewandten Seite begrenzt. Die Abschlussmembran nimmt im Wesentlichen drucklos das Volumen der aus dem Arbeitsraum in den Ausgleichsraum verdrängten Dämpfungsflüssigkeit auf, wobei tieffrequente, großamplitudige Schwingungen dadurch gedämpft werden, dass die innerhalb des Dämpfungskanals angeordnete Flüssigkeitssäule durch den Dämpfungskanal hindurch zwischen dem Arbeitsraum und dem Ausgleichsraum hin- und herverlagert wird.

### Kurzbeschreibung der Zeichnung

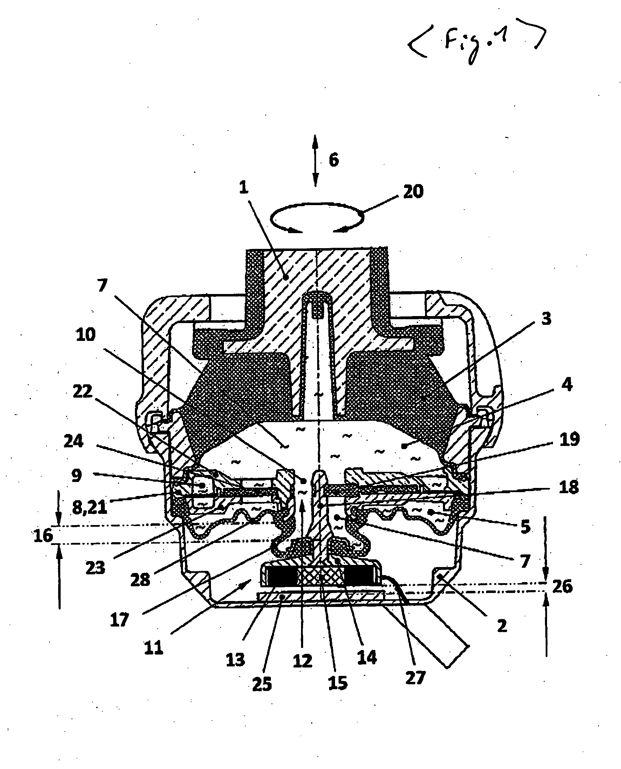

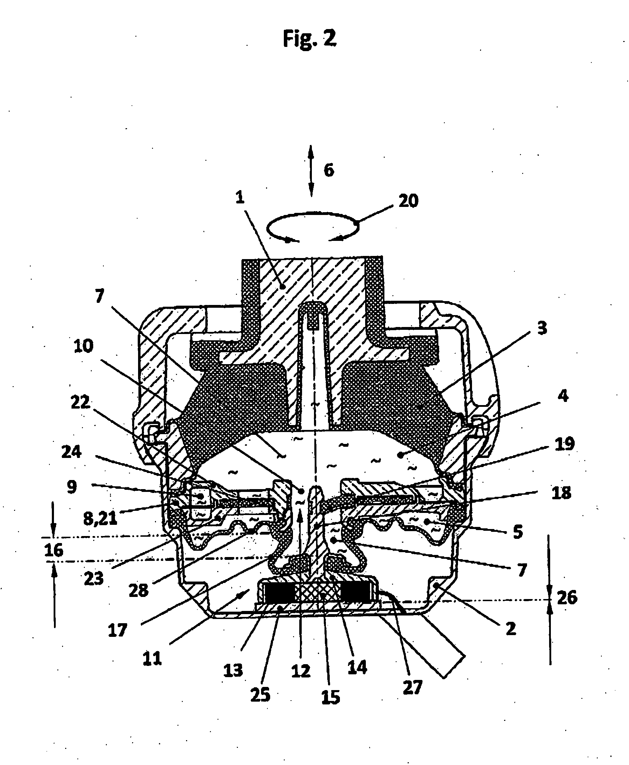

Ein Ausführungsbeispiel des beanspruchten Hydrolagers wird nachfolgend anhand der Fig. 1 und 2 näher beschrieben. Diese zeigen jeweils in schematischer Darstellung:
- Fig. 1: ein Ausführungsbeispiel des Hydrolagers, bei dem die Stelleinrichtung zur Schwingungsisolation von laufbedingten Motorvibrationen geschaltet ist; der Anker ist dem Rückschlussteil mit axialem Abstand benachbart und schwingfähig zugeordnet,
- Fig. 2: das Hydrolager aus Fig. 1, bei dem die Stelleinrichtung nicht-geschaltet ist; der Anker ist an dem Rückschlussteil arretiert.

### Ausführung der Erfindung

In den Fig. 1 und 2 ist ein Ausführungsbeispiel eines schaltbaren Hydrolagers gezeigt. Das Hydrolager umfasst ein Traglager 1 und ein Auflager 2, die durch einen hohlkegelförmig ausgebildeten Federkörper 3 aus einem gummielastischen Werkstoff elastisch nachgiebig aufeinander abgestützt sind. Innerhalb des Hydrolagers ist ein Arbeitsraum 4 angeordnet sowie ein Ausgleichsraum 5, wobei der Arbeitsraum 4 und der Ausgleichsraum 5 mit Dämpfungsflüssigkeit 7 gefüllt sind. Der Arbeitsraum 4 wird durch das Traglager 1, den Federkörper 3 und das Auflager 2 sowie die Trennwand 8 begrenzt. Der Ausgleichsraum 5 wird demgegenüber durch die Trennwand 8 begrenzt und durch die rollbalgförmige Abschlussmembran 28. Die Trennwand 8 ist als Düsenkäfig 21 ausgebildet und umfasst die obere Düsenscheibe 22 und die untere Düsenscheibe 23, die einander mit axialem Abstand benachbart zugeordnet sind, wobei in axialer Richtung zwischen den Düsenscheiben 22, 23 die zweite Membran 24 angeordnet ist, die aus einem gummielastischen Werkstoff besteht. Außerdem wird durch die beiden Düsenscheiben 22, 23 der Dämpfungskanal 9 begrenzt. In dem hier gezeigten Ausführungsbeispiel ist die zweite Membran 24 vom Dämpfungskanal 9 außenumfangsseitig umschlossen.

Kleinamplitudige, höherfrequente Schwingungen werden durch die zweite Membran 24 isoliert, die zwischen den beiden Düsenscheiben 22, 23 axial in Richtung der betriebsbedingt eingeleiteten Schwingungen 6 hin und her beweglich ist.
Diese zweite Membran 24 kann auch zwischen den Düsenscheiben 22, 23 eingespannt sein und im Rahmen ihrer Nachgiebigkeit im Düsenkäfig 21 höherfrequente Schwingungen isolieren.

Großamplitudige, tieffrequente Schwingungen werden demgegenüber dadurch gedämpft, dass die Dämpfungsflüssigkeit 7 durch den Dämpfungskanal 9 zwischen dem Arbeitsraum 4 und dem Ausgleichsraum 5 hin und her verlagert wird.

Wird ein Motor auf dem beanspruchten Hydrolager gelagert, weist dieser leerlaufbedingte Vibrationen auf, die ebenfalls isoliert werden müssen. Dafür ist der Tilgerkanal 12 vorgesehen, der durch die Stelleinrichtung 11 schaltbar ist. Die Stelleinrichtung 11 ist durch einen axial in Richtung der eingeleiteten Schwingungen 6 schwingfähigen, elektrisch ansteuerbaren Elektromagnet 13 gebildet, der als Anker 14 ausgebildet ist.

Im hier gezeigten Ausführungsbeispiel umschließt der kreisringförmige Elektromagnet 13 den Permanentmagnet 15 außenumfangsseitig.

Um ein sicheres Betriebsverhalten des Hydrolagers zu gewährleisten, ist der Elektromagnet 13 im nicht-bestromten Zustand durch die Magnetkraft des Permanentmagnets 15 am ferromagnetischen Rückschlussteil 25 gehalten, wie in Fig. 2 dargestellt.

Der Tilgerkanal 12 ist strömungsleitend mit dem Arbeitsraum 4 verbunden und zwar unabhängig davon, ob der Anker 14 schwingfähig im Hydrolager angeordnet oder am Rückschlussteil 25 festgelegt ist. Der Tilgerkanal 12 ist durch die Durchtrittsöffnung 10 innerhalb der Trennwand 8 und die erste rollbalgförmig ausgebildete und sich in axialer Richtung erstreckende Membran 17 begrenzt, die aus einem gummielastischen Werkstoff besteht. An der ersten Membran 17 ist der Anker 14 flüssigkeitsdicht festgelegt.
Der Führungsstift 18 des Ankers 14 erstreckt sich bis in die Durchtrittsöffnung 10 und ist in der Durchtrittsöffnung 10 von drei gleichmäßig in Umfangsrichtung 20 verteilt angeordneten Führungsstegen 19 geführt.

In Fig. 1 ist der betätigte Elektromagnet 13 gezeigt. Die Bestromung des Elektromagnets 13 kompensiert die Magnetkraft des Permanentmagnets 15, so dass der Anker 14 vom Rückschlussteil 25 in axialer Richtung abhebt und in einer, durch die erste Membran 17 schwingfähigen mittleren Position gehalten wird.

Das Hydrolager weist diesen Betriebszustand dann auf, wenn ein angeschlossener Motor mit Leerlaufdrehzahl läuft, Die leerlaufbedingten Motorvibrationen werden durch die durch die Tilgerwirkung abgesenkte dynamische Steifigkeit sehr gut isoliert.

In Fig. 2 wird der Motor mit einer Drehzahl, die oberhalb der Leerlaufdrehzahl liegt, betrieben. Der Elektromagnet 13 ist nun nicht mehr angesteuert, so dass nur noch der Permanentmagnet 15 wirksam ist. Durch den Permanentmagnet 15 wird der Anker 14 an das Rückschlussteil 25 gezogen und in seiner Position arretiert. Das Hydrolager verhält sich nun wie ein konventionelles, nicht-schaltbares Hydrolager.

## Patentansprüche

1. Hydrolager, umfassend ein Traglager (1) und ein Auflager (2), die durch einen im Wesentlichen hohlkegelförmig ausgebildeten Federkörper (3) aus gummielastischem Werkstoff elastisch nachgiebig aufeinander abgestützt sind und einen Arbeitsraum (4) und einen Ausgleichsraum (5), die axial in Richtung der betriebsbedingt eingeleiteten Schwingungen (6) benachbart zueinander angeordnet und jeweils mit Dämpfungsflüssigkeit (7) gefüllt sind und auf ihren axial einander zugewandten Seiten durch eine gemeinsame Trennwand (8) räumlich voneinander getrennt und durch einen in der Trennwand (8) angeordneten Dämpfungskanal (9) flüssigkeitsleitend miteinander verbunden sind und wobei die Trennwand (8) eine Durchtrittsöffnung (10) aufweist, die einen Bestandteil eines durch eine Stelleinrichtung (11) schaltbaren Tilgerkanals (12) bildet, **dadurch gekennzeichnet, dass** die Stelleinrichtung (11) durch einen axial in Richtung der eingeleiteten Schwingungen (6) schwingfähigen, elektrisch ansteuerbaren Elektromagnet (13) gebildet ist, der als Anker (14) ausgebildet ist und dass der Anker (14) und die Trennwand (8) durch eine rollbalgförmig ausgebildete und sich axial erstreckende erste Membran (17) aus gummielastischem Werkstoff relativ schwingfähig miteinander verbunden sind und dass die erste Membran (17) stirnseitig einerseits mit der Trennwand (8) und stirnseitig andererseits mit dem Anker (14) flüssigkeitsdicht verbunden ist.

2. Hydrolager nach Anspruch 1, **dadurch gekennzeichnet, dass** der Elektromagnet (13) durch einen Gleichstrom ansteuerbar ist.

3. Hydrolager nach Anspruch 1, **dadurch gekennzeichnet, dass** der Elektromagnet (13) durch einen Wechselstrom ansteuerbar ist.

4. Hydrolager nach einem der Ansprüche 2 oder 3, **dadurch gekennzeichnet, dass** der Gleichstrom von einem Wechselstrom überlagerbar ist.

5. Hydrolager nach einem der Ansprüche 1 bis 4, **dadurch gekennzeichnet, dass** der als Anker (14) ausgebildete Elektromagnet (13) kreisringförmig ausgebildet ist.

6. Hydrolager nach einem der Ansprüche 1 bis 5, **dadurch gekennzeichnet, dass** der Elektromagnet (13) einen Permanentmagnet (15) aussenumfangsseitig ortsfest umschließt und zusammen mit dem Permanentmagnet (15) den Anker (14) bildet.

7. Hydrolager nach einem der Ansprüche 1 bis 6, **dadurch gekennzeichnet, dass** der Anker (14) der Trennwand (8) auf der dem Arbeitsraum (4) axial abgewandten Seite axial mit Abstand (16) benachbart zugeordnet ist.

8. Hydrolager nach einem der Ansprüche 1 bis 7, **dadurch gekennzeichnet, dass** der Anker (14) einen sich axial erstreckenden Führungsstift (18) aufweist, der sich axial bis in die Durchtrittsöffnung (10) erstreckt und in der Durchtrittsöffnung (10) von sich in radialer Richtung erstreckenden Führungsstegen (19) aufgenommen ist.

9. Hydrolager nach Anspruch 8, **dadurch gekennzeichnet, dass** der Führungsstift (18) von drei gleichmäßig in Umfangsrichtung (20) verteilt angeordneten Führungsstegen (19) umschlossenen ist.

10. Hydrolager nach einem der Ansprüche 1 bis 9, **dadurch gekennzeichnet, dass** die Trennwand (8) als Düsenkäfig (21) ausgebildet ist und zwei axial benachbart zueinander angeordnete Düsenscheiben (22, 23) umfasst, zwischen denen eine axial in Richtung der eingeleiteten Schwingungen (6) schwingfähige zweite Membran (24) angeordnet ist.

11. Hydrolager nach Anspruch 10, **dadurch gekennzeichnet, dass** die Führungsstege (19) und die zweite Membran (24) einstückig ineinander übergehend und materialeinheitlich ausgebildet sind und aus einem gummielastischen Werkstoff bestehen.

12. Hydrolager nach einem der Ansprüche 1 bis 11, **dadurch gekennzeichnet, dass** der Anker (14), die erste Membran (17) und die Durchtrittsöffnung (10) den Tilgerkanal (12) begrenzen.

13. Hydrolager nach einem der Ansprüche 1 bis 12, **dadurch gekennzeichnet, dass** dem Anker (14) auf der dem Tilgerkanal (12) axial abgewandten Seite ein ferromagnetisches Rückschlussteil (25) axial benachbart zugeordnet ist.

14. Hydrolager nach Anspruch 13, **dadurch gekennzeichnet, dass** der angesteuerte Anker (14) und das Rückschlussteil (25) einander mit axialem Abstand (26) benachbart zugeordnet sind, wobei der axiale Abstand (26) größer als die betriebsbedingte Amplitude des angesteuerten Ankers (14) ist.

15. Hydrolager nach Anspruch 14, **dadurch gekennzeichnet, dass** der nicht-angesteuerte Anker (14) das Rückschlussteil (25) anliegend berührt.

16. Hydrolager nach einem der Ansprüche 13 bis 15, **dadurch gekennzeichnet, dass** das Rückschlussteil (25) relativ ortsfest an einem Gehäusedeckel (26) festgelegt ist, der mit dem Auflager (2) verbunden ist.

17. Hydrolager nach Anspruch 16, **dadurch gekennzeichnet, dass** der Gehäusedeckel (26) von einer elektrischen Leitung (27) zur Ansteuerung des Elektromagnets (13) durchdrungen ist.

18. Hydrolager nach einem der Ansprüche 1 bis 17, **dadurch gekennzeichnet, dass** die erste Membran (17) einstückig ineinander übergehend und materialeinheitlich mit einer im Wesentlichen rollbalgförmigen Abschlussmembran (28) ausgebildet ist, die den Ausgleichsraum (2) auf der der Trennwand (8) axial abgewandten Seite begrenzt.

## Claims

1. A hydromount, comprising a carrying mount (1) and a support mount (2), which are supported on each other in an elastically yielding manner by a resilient body (3) of rubber-elastic material, which is configured substantially in a hollow-cone shape, and a working chamber (4) and an equalisation chamber (5), which are disposed axially adjacent to each other in the direction of the operationally introduced vibrations (6) and are each filled with damping liquid (7) and are spatially separated from each other on their axially facing sides by a common partition wall (8) and are connected to each other in a liquid-conducting manner by a damping channel (9) disposed in the partition wall (8), and wherein the partition wall (8) has a passage opening (10) forming a constituent part of an absorber channel (12) that is switchable by means of an actuator (11), **characterised in that** the actuator (11) is formed by an electrically drivable electromagnet (13) which is capable of vibrating axially in the direction of the introduced vibrations (6) and which is configured as an armature (14), and that the armature (14) and the partition wall (8) are connected to each other in a relatively vibration-capable manner by means of a first membrane (17) of a rubber-elastic material, which is configured in the shape of a rolling bellows and extends axially, and that the first membrane (17) is connected in a liquid-tight manner to the partition wall (8) on its one end face and to the armature (14) on its other end face.

2. The hydromount according to claim 1, **characterised in that** the electromagnet (13) is drivable by means of a direct current.

3. The hydromount according to claim 1, **characterised in that** the electromagnet (13) is drivable by means of an alternating current.

4. The hydromount according to any one of the claims 2 or 3, **characterised in that** the direct current can be superposed by an alternating current.

5. The hydromount according to any one of the claims 1 to 4, **characterised in that** the electromagnet (13) configured as an armature (14) is configured in an annular manner.

6. The hydromount according to any one of the claims 1 to 5, **characterised in that** the electromagnet (13) encloses a permanent magnet (15) stationarily on the side of the outer circumference and, together with the permanent magnet (15), forms the armature (14).

7. The hydromount according to any one of the claims 1 to 6, **characterised in that** the armature (14), with an axial spacing (16), is adjacent to and associated with the partition wall (8) on the side facing axially away from the working chamber (4).

8. The hydromount according to any one of the claims 1 to 7, **characterised in that** the armature (14) has an axially extending guiding pin (18), which extends axially into the passage opening (10) and is received in the passage opening (10) by guiding webs (19) extending in the radial direction.

9. The hydromount according to claim 8, **characterised in that** the guiding pin (18) is enclosed by three guiding webs (19) that are disposed in a circumferentially (20) uniformly distributed manner.

10. The hydromount according to any one of the claims 1 to 9, **characterised in that** the partition wall (8) is configured as an orifice cage (21) and comprises two orifice discs (22, 23) disposed axially adjacent to each other, between which a second membrane (24), which is capable of vibrating axially in the direction of the introduced vibrations (6), is disposed.

11. The hydromount according to claim 10, **characterised in that** the guiding webs (19) and the second membrane (24) are configured so as to integrally merge into each other and be made of the same material, and are made of a rubber-elastic material.

12. The hydromount according to any one of the claims 1 to 11, **characterised in that** the armature (14), the first membrane (17) and the passage opening (10) delimit the absorber channel (12).

13. The hydromount according to any one of the claims 1 to 12, **characterised in that** a ferromagnetic back-iron part (25) is axially adjacent to and associated with the armature (14) on the side facing axially away from the absorber channel (12).

14. The hydromount according to claim 13, **characterised in that** the driven armature (14) and the back-iron part (25) are adjacent to each other with an axial spacing (26) and associated with each other, the axial spacing (26) being greater than the operational amplitude of the driven armature (14).

15. The hydromount according to claim 14, **characterised in that** the nondriven armature (14) contacts the back-iron part (25) in an abutting manner.

16. The hydromount according to any one of the claims 13 to 15, **characterised in that** the back-iron part (25) is fixed in a relatively stationary manner on a housing cover (26) connected to the support mount (2).

17. The hydromount according to claim 16, **characterised in that** the housing cover (26) is penetrated by an electrical line (27) for driving the electromagnet (13).

18. The hydromount according to any one of the claims 1 to 17, **characterised in that** the first membrane (17) is configured so as to integrally merge with and be made of the same material as a cover membrane (28) that substantially has the form of an air bellows, which delimits the equalisation chamber (2) on the side facing axially away from the partition wall (8).

## Revendications

1. Support hydraulique, comprenant un support porteur (1) et un support d'appui (2), qui sont soutenus l'un sur l'autre de manière à fléchir élastiquement grâce à un corps-ressort (3) en matériau présentant l'élasticité du caoutchouc, réalisé sensiblement en forme de cône creux, et comprenant une chambre de travail (4) et une chambre d'égalisation (5) qui sont agencées voisines l'une de l'autre axialement en direction des oscillations (6) imposées lors du fonctionnement, et qui sont respectivement remplies d'un liquide amortisseur (7), et sont séparées l'une de l'autre dans l'espace par une paroi de séparation commune (8) sur leurs côtés tournés l'un vers l'autre, et sont reliées l'une à l'autre de manière à conduire le liquide via un canal d'amortissement (9) agencé dans la paroi de séparation (8), et dans lequel la paroi de séparation (8) comporte une ouverture traversante (10), qui constitue un composant d'un canal de compensation (12) susceptible d'être mis en service par un dispositif d'activation (11),
**caractérisé en ce que** le dispositif d'activation (11) est formé par un électroaimant (13) à pilotage électrique et capable d'osciller axialement en direction des oscillations imposées (6), ledit électroaimant étant réalisé sous forme d'armature (14), et **en ce que** l'armature (14) et la paroi de séparation (8) sont reliées l'une à l'autre par une première membrane (17) en matériau présentant l'élasticité du caoutchouc, réalisée à la manière d'un soufflet déroulant et s'étendant axialement, de manière à pouvoir osciller l'une par rapport à l'autre, et **en ce que** la première membrane (17) est reliée du côté frontal d'une part avec la paroi de séparation (8) et du côté frontal d'autre part avec l'armature (14), de manière étanche aux liquides.

2. Support hydraulique selon la revendication 1, **caractérisé en ce que** l'électroaimant (13) est susceptible d'être piloté par un courant continu.

3. Support hydraulique selon la revendication 1, **caractérisé en ce que** l'électroaimant (13) est susceptible d'être piloté par un courant alternatif.

4. Support hydraulique selon l'une des revendications 2 ou 3, **caractérisé en ce que** le courant continu est susceptible d'être superposé par un courant alternatif.

5. Support hydraulique selon l'une des revendications 1 à 4, **caractérisé en ce que** l'électroaimant (13) réalisé comme une armature (14) est réalisé en forme d'anneau circulaire.

6. Support hydraulique selon l'une des revendications 1 à 5, **caractérisé en ce que** l'électroaimant (13) entoure de manière stationnaire un aimant permanent (15) du côté de sa périphérie extérieure, et forme l'armature (14) conjointement avec l'aimant permanent (15).

7. Support hydraulique selon l'une des revendications 1 à 6, **caractérisé en ce que** l'armature (14) est associée et voisine de la paroi de séparation (8) avec une distance axiale (16) sur le côté détourné axialement de la chambre de travail (4).

8. Support hydraulique selon l'une des revendications 1 à 7, **caractérisé en ce que** l'armature (14) comprend une tige de guidage (18) s'étendant axialement, qui s'étend axialement jusque dans l'ouverture traversante (10), et qui est reçue dans l'ouverture traversante (10) par des barrettes de guidage (19) s'étendant en direction radiale.

9. Support hydraulique selon la revendication 8, **caractérisé en ce que** la tige de guidage (18) est entourée par trois barrettes de guidage (19) agencées de manière régulièrement répartie en direction périphérique (20).

10. Support hydraulique selon l'une des revendications 1 à 9, **caractérisé en ce que** la paroi de séparation (8) est réalisée à la manière d'une cage à buses (21) et inclut deux plaques à buses (22, 23) agencées axialement au voisinage l'une de l'autre, entre lesquelles est agencé une seconde membrane (24) capable d'osciller axialement en direction des oscillations imposées (6).

11. Support hydraulique selon la revendication 10, **caractérisé en ce que** les barrettes de guidage (19) et la seconde membrane (24) sont réalisées d'une seule pièce de manière à se transformer l'une dans l'autre et d'un matériau unitaire, et sont constituées en un matériau présentant l'élasticité du caoutchouc.

12. Support hydraulique selon l'une des revendications 1 à 11, **caractérisé en ce que** l'armature (14), la première membrane (17) et l'ouverture traversante (10) délimitent le canal de compensation (12).

13. Support hydraulique selon l'une des revendications 1 à 12, **caractérisé en ce qu'**une pièce de bouclage ferromagnétique (25) est associé à l'armature (14) et de manière axialement voisine, sur le côté axialement détourné du canal de compensation (12).

14. Support hydraulique selon la revendication 13, **caractérisé en ce que** l'armature pilotée (14) et la pièce de bouclage (25) sont associées l'une à l'autre et voisines avec une distance axiale (26), de sorte que la distance axiale (26) est plus grande que l'amplitude de l'armature pilotée (14) lors du fonctionnement.

15. Support hydraulique selon la revendication 14, **caractérisé en ce que** l'armature non pilotée (14) vient toucher contre la pièce de bouclage (25).

16. Support hydraulique selon l'une des revendications 13 à 15, **caractérisé en ce que** la pièce de bouclage (25) est immobilisée de manière relativement stationnaire sur un couvercle de boîtier (26) qui est relié au support d'appui (2).

17. Support hydraulique selon la revendication 16, **caractérisé en ce que** le couvercle de boîtier (26) est traversé par une ligne électrique (27) pour le pilotage de l'électroaimant (13).

18. Support hydraulique selon l'une des revendications 1 à 17, **caractérisé en ce que** la première membrane (17) est réalisée d'une seule pièce avec une membrane de terminaison (28) sensiblement en forme de soufflet déroulant, de manière à se transformer l'une dans l'autre et d'un matériau unitaire, ladite membrane de terminaison limitant la chambre d'égalisation (2) sur le côté axialement détourné de la paroi de séparation (8).
